# EUROPEAN PATENT SPECIFICATION

(11) **EP 1 757 003 B1**
(45) Date of publication and mention of the grant of the patent: **04.06.2014**
(21) Application number: 04815448.8
(22) Date of filing: 23.12.2004
(51) Int. Cl.: H04L 12/58, H04L 29/06

(54) **METHOD AND APPARATUS FOR DATA TRANSFER**
VERFAHREN UND VORRICHTUNG FÜR DATENTRANSFER
PROCEDE ET APPAREIL PERMETTANT LE TRANSFERT DE DONNEES

(30) Priority: 02.01.2004 US 533893 P; 22.12.2004 US 20326 P
(43) Date of publication of application: 28.02.2007
(73) Proprietor: Motorola Mobility LLC, Libertyville, IL 60048 (US)
(72) Inventor: KOTZIN, Michael, D., Buffalo Grove, IL 60089 (US)
(74) Representative: Openshaw, Paul Malcolm
(86) International application number: PCT/US2004/043373
(87) International publication number: WO 2006/137817

(56) References cited:
- WO-A2-01/55922
- WO-A2-03/055219
- US-A1- 2002 157 002
- US-A1- 2005 198 095

## Description

### FIELD OF THE INVENTION

The present invention relates generally to the transfer of data, and more particularly to transferring protected data between devices.

### BACKGROUND OF THE INVENTION

Transferring data between electronic devices is generally known. Data is generally transferred manually, via wires and cables, or wirelessly wherein the transfer process is generally transparent to the user. Icons and size mapping representations are used to show the transfer process or the progress of the transfer. However this does not allow the user to associate with the actual transfer of the data, and in particular, with data that is protected such as licensed intellectual property.

Digital rights management (DRM) systems are generally known for managing content that is protected, i.e. intellectual property. The purpose of DRM is to protect the ownership rights that go along with the digitally stored data or content by restricting access or granting permission to authorized users. This allows the owner of the digital content to control the use of the content including providing rules that regulate access to and the processing of the content. This includes who has a right to store the content, who can access the information and how the information is managed. These rights are generally attached to the content or a part of a trust chain associated with the content. Because of the ownership rights associated with the content, transferring the content from one device to another also involves a complex transaction that also allows for transfer and the management of the rights associated with the content. The content can not be simply sent from one device to another.

DRM is typically implemented with some form of customized encryption. Cryptographic keys for accessing the content are provided to a user who is authorized to access the content, which generally include limitations on copying, printing, and redistribution for example. This process is generally transparent to the user.

With current DRM systems, the user either can not forward the content because it is protected by a "forward lock" method preventing the forwarding of content. Such content as ring tones on radiotelephones for example are protected property rights and their distribution is controlled by the forward lock method as a means of content management. However, this does not allow for legal transfer of content, which can be beneficial to the content owner as well as the general public. Upcoming schemes that do allow users who are not the content owners transfer protected content lack ease of use and are non intuitive. Easy transfer of protected content legally from one user to another, particularly in the electronic and wireless world will allow content owners the benefit of increasing income from the content.

WO 01/55922 A2 discloses an apparatus and method for accessing multimedia content using physical bookmarks. The apparatus for accessing multimedia content using physical bookmarks includes one or more tokens. Each of the tokens is associated with an identification code, wherein the identification code is associated with a multimedia content. The apparatus also includes an input device having a receptacle. The input device is operable to receive a first identification code from a first token placed on the receptacle in an arbitrary angular orientation. A processing component is coupled to the input device and operable to receive the first identification code, and operable to deliver a first multimedia content associated with the first identification code. The method includes detecting a token that is placed on a receptacle of an input device by a user, wherein the token has an identification code. The method also includes reading the identification code associated with the token, and transmitting the identification code to a content server. The method further includes receiving a multimedia content identified by the identification code from the content server, and delivering the multimedia content to the user.

What is needed is a method and apparatus that allows content to be transferred in an intuitive manner.

### BRIEF DESCRIPTION OF THE DRAWINGS

The various aspects, features and advantages of the present invention will become more fully apparent to those having ordinary skill in the art upon careful consideration of the following Detailed Description of the Drawings with the accompanying drawings described below.
FIG. 1 is an exemplary communication system for data transfer in accordance with the present invention;
FIG. 2 is an exemplary flow diagram for data transfer;
FIG. 3 is an exemplary circuit schematic in block diagram form of a wireless communication device;
FIG. 4 is an exemplary flow diagram of a data transfer;
FIG. 5 is an exemplary wireless device;
FIG. 6 is an exemplary flow diagram of a data transfer;
FIG. 7 is an exemplary communication system for data transfer; and
FIG. 8 is an exemplary communication system for data transfer.

### DETAILED DESCRIPTION OF THE DRAWINGS

While the present invention is achievable by various forms of embodiment, there is shown in the drawings and described hereinafter present exemplary embodiments with the understanding that the present disclosure is to be considered an exemplification of the invention and is not intended to limit the invention to the specific embodiments contained herein.

A method and apparatus for transferring information between electronic devices is disclosed. A first electronic device has information, commonly referred to as data or content, stored therein. The content is transferable to another electronic device, either from the first electronic device or another source. To transfer the content between a first device and a second device, the user selects the desired content to be transferred. Next, a uniquely identifiable set of information is associated with the content. The uniquely identifiable set of information is then transferred to the second device. The second device receives the content from a source having at least the uniquely identifiable set of information.

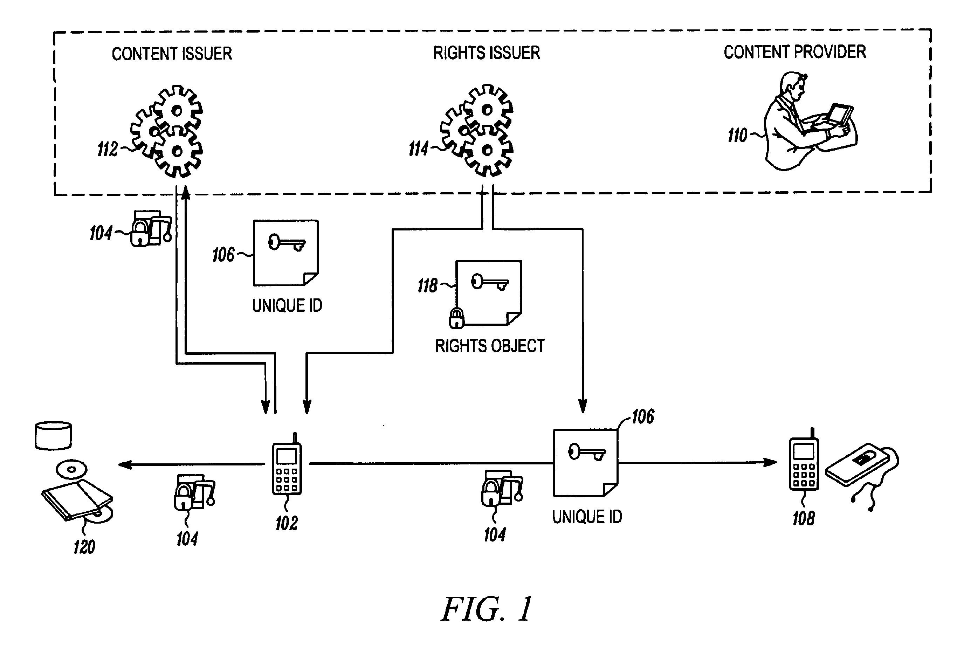

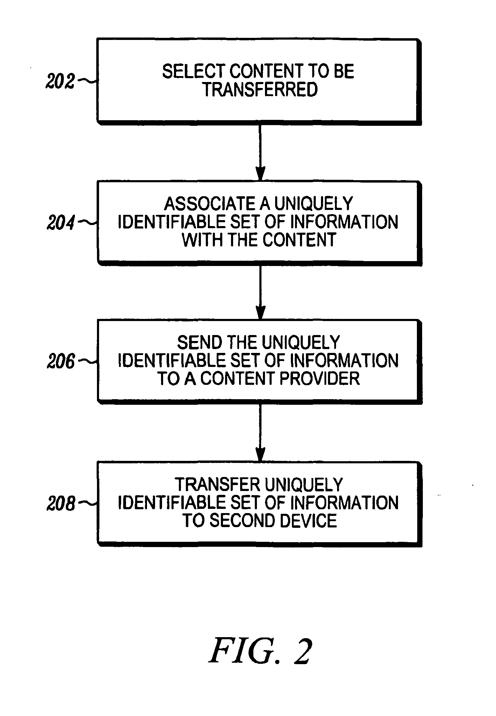

FIG. 1 and FIG. 2, illustrate the transfer of a content 104 from a first device 102 to a second device 108 according to one exemplary embodiment. The content 104 to be transferred is identified or selected 202 in the first device 102. A uniquely identifiable set of information 106 is then associated 204 with the content 104. The uniquely identifiable set of information 106 can be associated with the content 104 by attaching the uniquely identifiable set of information 106 to the content 104 in a single file, or by any other means of relating the two pieces of information together. Another example may be to associate the uniquely identifiable set of information 106 to the content 104 in a database of the first device 102. The uniquely identifiable set of information 106 may be digitally generated or may be a digital representation of a physical object.

The selection 202 of the uniquely identifiable set of information 106 may be an automatic operation by the first device 102 or a manual operation initiated by the user of the first device 102. It is envisioned that the user would identify what the uniquely identifiable set of information 106 will be, and then through a manual operation, such as pressing a button on the device for example, digitize and store the uniquely identifiable set of information 106 in a memory of the device. The uniquely identifiable set of information 106, and its relation to the content 104, or with the content 104, is transferred 206 to a content provider 110 in this exemplary embodiment.

The uniquely identifiable set of information 106 is also transferred 208 to the second device 108, instead of the content 104 itself. The uniquely identifiable set of information 106 represents or identifies the content 104. The second device 108 then retrieves the content 104 from either the first device 102 or the content provider 110. In this exemplary embodiment, the content 104 is transferred to the second device 108 from the content provider 110. In another exemplary embodiment the content 104 is transferred to the second device 108 from first device 102. The content 104 may also be transferred from a third device (not shown). The content provider 110 in this exemplary embodiment is a trusted source. The first device 102 may also be a trusted source. The content provider 110 includes a content issuer portion 112, and a rights issuer 114 portion. The content issuer portion 112, and a rights issuer portion 114 may be one entity or two separate entities. The content issuer portion 112 distributes the content 104 and the rights issuer portion 114 distribute rights, also known as rights objects. In yet another exemplary embodiment, the first device 102 transfers the content 104 along with the uniquely identifiable set of information 106 as discussed further below.

The source from which the content 104 is transferred from may depend on the characteristics of the content 104. The source may also depend on the operations of the service provider serving the device which is receiving or sending the content 104. For example, if the content 104 is a large data file, then it may be more efficient and faster to transfer the content 104 from a source other than the first device 102 which has greater bandwidth and processing power, such as the content provider 110 or the like. If the content 104 is a relatively small set of information, such as a ring tone, contact information or an icon for example, then the content 104 may be transferred directly from the first device 102 to the second device 108. Larger files, such as media and multimedia files including audio, music and motion pictures may be transferred from the content provider 110. The content 104 may also be transferred at the same time as the uniquely identifiable set of information 106. Even further, the content may also be encrypted before it is transferred to the second device 108 regardless of the source. These are only exemplary embodiments as device capability changes, devices may be able to transfer larger amounts of data between one another. When the content 104 is created at the first device 102 for example, the first device is the source, and there may or may not be a content provider that could distribute the content 104. The first device 102 would need to be the source regardless of the file size, when another content provider 110 is available.

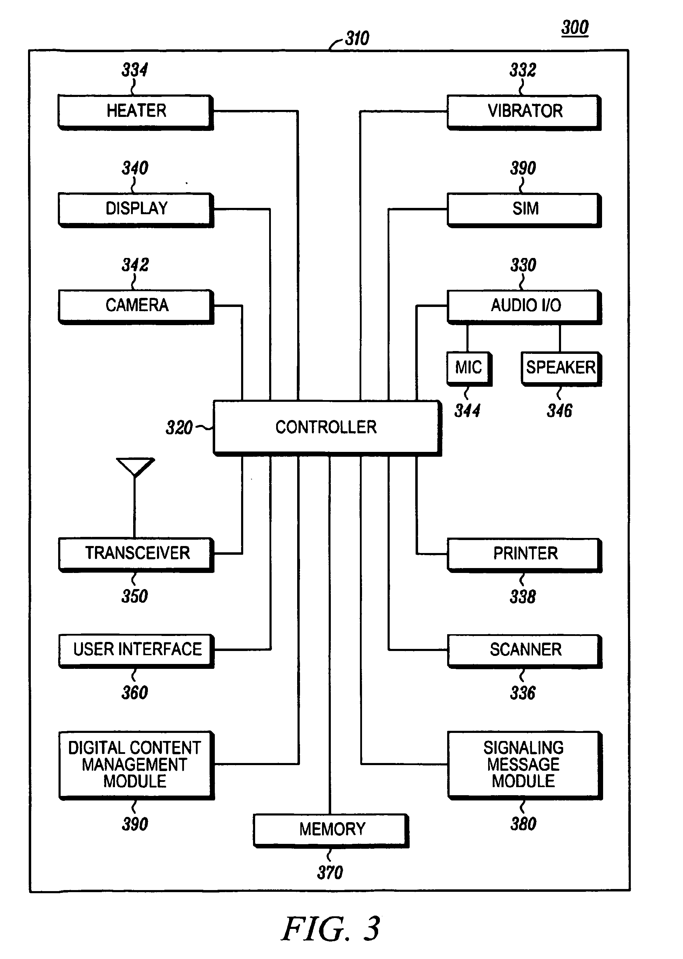

FIG. 3 shows an exemplary block diagram of an exemplary wireless communication device 102, according to one embodiment, such as the first 102 or second device 108. The device 102 can include a housing 310, a controller 320 carried in the housing 310, audio input and output circuitry 330 carried in the housing 310, a display 340 coupled to the housing 310, a transceiver 350 carried in the housing 310, a user interface 360 coupled to the housing 310, and a memory 370 carried in the housing 310. A digital content management module 390, also known as a DRM agent, is coupled to the controller 320, or as software stored in the memory and executable by the controller 320. A signal control module 380 may be hardware coupled to the controller 320 or defined by software located in the memory 370 and executed by the controller 320. The memory 370 can store the uniquely identifiable set of information 106 and content 104 or it may be stored in a subscriber identity module (SIM) 390 or other removable memory such as compact flash card, secure digital (SD) card, SmartMedia, memory stick, USB flash drive, PCMCIA or the like. The display 340 can be a liquid crystal display (LCD), a light emitting diode (LED) display, a plasma display, or any other means for displaying information. The transceiver 350 may include a transmitter and/or a receiver. The audio input and output circuitry 330 can include a microphone, a speaker, a transducer, or any other audio input and output circuitry. The user interface 360 can include a keypad, buttons, a touch pad, a joystick, an additional display, or any other device useful for providing an interface between a user and an electronic device. The memory 370 may include a random access memory, a read only memory, an optical memory, a subscriber identity module memory (SIMM), or any other memory that can be coupled to a mobile communication device as discussed above.

The first device 102 may also have a vibrator 332 to provide haptic feedback to the user, or a heat generator 334, both of which are coupled to the controller directly or though an I/O driver (not shown). The device 102 may also include a scanner 336 which is coupled to the controller, and may be coupled to the controller through an input driver. A printer 338 may also be optionally carried in the housing 310 and coupled to the controller. A camera 342 may also be carried on the housing 310 to take pictures as input to the device. The camera 342 is also coupled to the controller 320.

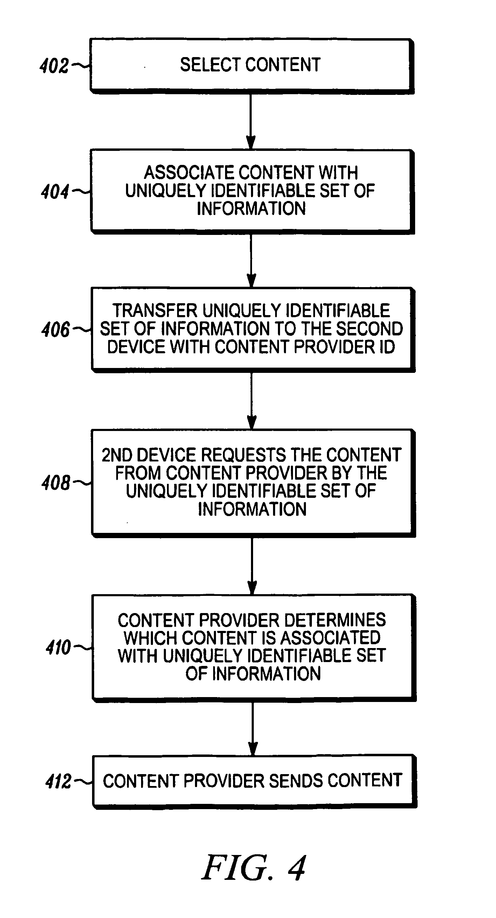

FIG. 4 is another exemplary flow diagram of a data transfer methods, wherein the content 104 has digital rights associated therewith. In the exemplary embodiment, the Digital Rights Management (DRM) software, commonly known as a DRM agent, is an entity stored in and executed by the device 300. The DRM agent 390 manages the permissions associated with the content 104 which are stored in a rights object 118. For example, the DRM agent 390 in the exemplary embodiment allows the first device 102 to transfer, directly or indirectly, the content 104 to another device, the second device 108 in this exemplary embodiment. Management of the content 104 must comply with the rights stored in the rights object 118 associated with the content 104 in this embodiment. The rights object 118 and the DRM agents 390 together control how the content 104 is managed. In this exemplary embodiment the DRM agent 930 must be present on the device in order for the content to be accessible.

In this exemplary embodiment, the second device 108 must receive the rights object 118, i.e. the appropriate rights, or permissions, to the content 104 before the content 104 can be transferred to or used by the second device 108. First, the content 104 to be transferred is selected 402. The content 104 is then associated 404 with a uniquely identifiable set of information 106. The uniquely identifiable set of information 106 is then transferred 406 to the second device 108 along with a content provider identification. The second device 108 requests 408 from the content provider 110, identified by the content provider identification along with the uniquely identifiable set of information 106. The content provider 110 determines 410 that the uniquely identifiable set of information 106 sent from the first device 102 matches the uniquely identifiable set of information 106 sent from the second device. The content provider 110 then sends 412 the content 104 to the second device 108. In this embodiment, the second device 108 then uses the content 104.

In another exemplary embodiment, the content provider 110, or the rights issuer 114 portion thereof, sends the rights object to the second device 108 which in conjunction with the DRM agent 390 presents an option to purchase the rights to use the content 104. The second device 108, or the user of the second device 108 may send a response accepting or denying the purchase. If the second device 108 accepts, the content provider sends the content 104. In an alternative exemplary embodiment, the content 104 is already present on the second device 108, the content provider 110 will send only the rights object 118 of the content 104 to the second device 108.

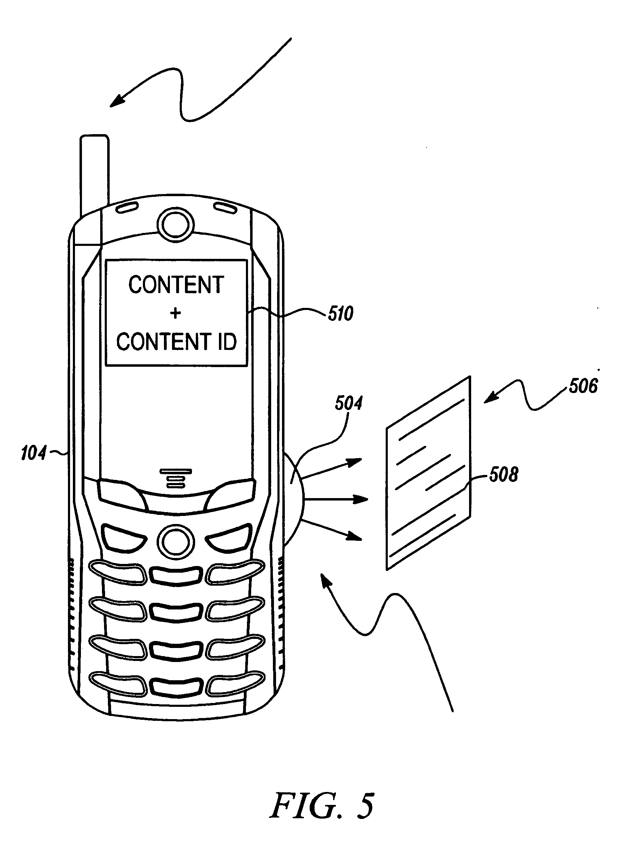

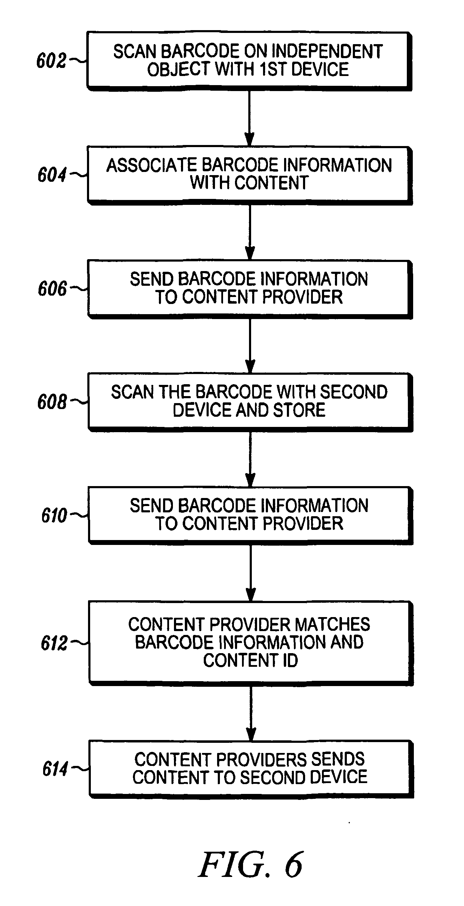

The uniquely identifiable set of information 106 may take many forms. In one exemplary embodiment, the uniquely identifiable set of information 106 is an independent physical object. A representation of the independent physical object must be input into the first device. For example, in one exemplary embodiment illustrated in FIG. 5, in combination with the exemplary flow diagram illustrated in FIG. 6, the first device 104 has a scanner 504 for scanning independent physical objects. The scanner 504 is used to scan 602 the independent physical object, which in the exemplary embodiment, is a bar code 506. The barcode information 508 from the barcode 506 is then associated 604 with the content 104 selected to be transferred. The first device 102 sends 606 the barcode information 508 to a content provider 110 of the content 104 along with a content ID 510 that identifies the content 104 associated with the barcode information 508. The second device 108 scans 608 the barcode 506 and thereby store the barcode information 508 into a memory of the second device 108. The second device 108 then sends 610 the barcode information to the content provider 110. The content provider 110 matches 612 the barcode information 508 sent from the second device 108 with the barcode information 508 and the content ID 510 sent from the first device 102. The content provider 110 then sends 614 the content 104 to the second device 108 in the exemplary embodiment. In another exemplary embodiment, the content provider 110 sends digital rights management information, such as a rights object file 118. The rights object files 118, in conjunction with the DRM agent 390, may query the user to acquire rights to the content 104 by purchasing the content or the like. The rights object file 118 may for example limit the number of times the content 104 may be accessed by the second device 108.

In another exemplary embodiment, the first device 102 includes a printer 338, to print coded information such as a barcode 506. The barcode information 508 is printed from the printer 338 of the first device 102. The printed barcode 506 is then scanned 608 by the second device 108, thereby retrieving the barcode information 508.

The barcode or coded information 506, 508 may also be presented on the display 340 of the device. The coded information 508 would represent the uniquely identifiable set of information 106. The coded information 508 would be associated with the content 104. The second device 108 would be put in close proximity to the first device 102 which displaying the coded information 508. The second device 108 would input, or potentially scan in the coded information 508 displayed on the display 340 of the first device 102.

In yet another exemplary embodiment, the first device 102 includes a camera. A picture of an independent object taken by the camera, would comprise the unique set of information. A camera in the second device 108, would then used to take a picture of the same independent object which would then be sent to the content provider 110 by the second device 108 in accordance with one of the above methods to retrieve the content 108.

In another exemplary embodiment, a sound is produced by a transducer, such as the speaker 346 in the first device 102. The sound is a unique set of tones, that can be randomly generated or a specific sound pattern such as a portion of a song. The sound produced by the speaker 346 represents the unique set of information that is associated with the content 104. The sound may be audible or sub-audible. The sound is received by a second transducer, a microphone 344 in the second device 108 of the exemplary embodiment. The second device 108 send a representation of the sound received at the microphone 344 to the content provider 110, to retrieve the content 104.

In yet another exemplary embodiment, a number is used as the uniquely identifiable set of information. The number is either input by the user or the first device 102 randomly generates the number. The number is then transferred manually or automatically to the second device 108. The number may be input to the second device 108 through a keypad or transmitted to the second device 108 over the air.

In yet another exemplary embodiment, a motion of the first device is captured. The motion represents the uniquely identifiable set of information 106 detected by accelerometers. Electrical signals transmitted by the accelerometers to the controller are saved as motion data and are a representation of the motion of the device. The motion data is then transmitted to the content provider. The second device, repeats the motion, and accelerometers in the second device 108 save the motion data and transmit the motion data to the content provider 110. The content provider matches the motion data and sends the content 104 to the second device.

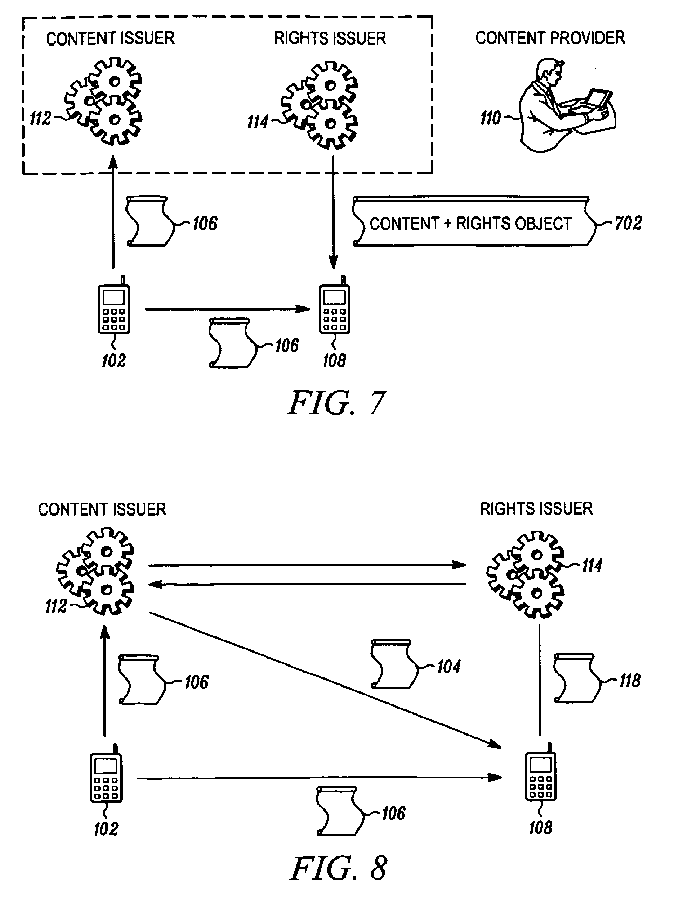

In one exemplary embodiment, shown in FIG. 7, the content 104 is distributed in a combined delivery format wherein the content 104 and the rights object 118 are delivered together in a combined data set 702. In one exemplary embodiment, shown in FIG. 7, the combined data set 702 is transferred from the content provider to the second device. In another exemplary embodiment, the combined data set 702 is transmitted from the first device 102 to the second device 108. Once the uniquely identifiable set of information 106 has been obtained, the first device 102 sends the uniquely identifiable set of information 106 to the second device 108. The second device 108 sends the uniquely identifiable set of information 106 to the content provider 110. The content and the rights object is combined into the combined data set 702 and sent by the content provider 110. The content 104, in this exemplary embodiment, is in the DRM content format (DCF). The content 104 may already be in the DCF or may need to be converted to the DCF before it is transferred to the second device 108. The rights object 118 which, in conjunction with a DRM agent 390 stored in the second device 108, manages the content 104 on the second device 108.

In another exemplary embodiment shown in FIG. 8, the content and the rights object are sent separately. The second device receives the content 104 from the content provider in the exemplary embodiment. The content may also be provided from the first device 102, in another exemplary embodiment. The rights object 118 is sent from the rights issuer 114, which may or may not be the same entity as the content issuer 112.

Content may also be streamed in packets to the first and second devices. In one exemplary embodiment, the content 104 is transferred in a continuous format. For example, streaming media may be transferred between devices in packetized format. In this embodiment, the packets of data are continuously sent to the second device 108 until the entire content 104 is sent or the data transfer is terminated. Each portion of the content 104, or packet, is part of the protected content. In one embodiment, each packet is protected, while in another embodiment one or more of the packets that make up the entire content are protected. The uniquely identifiable set of information 106 mat be associated with the overall content 104 or may be associated with each packet. It is envisioned that the uniquely identifiable set of information 106 will be associated with the content 104. The packetized content may be sent from the first device 102 to the second device 108 or from the content provider 110 to the second device 108.

Transferring the data, which is either the uniquely identifiable set of information 106 the content 104, or the rights object, or all three between the first and second device 102, 108 requires a communication link. The Data may be sent from the first device to the second device 108 directly or through a base station, node or repeater. It may be done through the wires of a cable or wirelessly. When the first device communicates directly over a wireless connection with the second device, the communication link may be formed by a prescribed method or through an ad hoc communication link.

In one exemplary embodiment, the first device 102 transfers the data over a direct wireless communication link. The direct wireless communication link may be a relatively short range link based on a wireless communication standard such as a Bluetooth, 802.11, IrDa or the like.

The communication link may be a link established indirectly through a base station for example in an exemplary communication system such as a radiotelephone system. For example, the wireless device may be programmed to communicate on a CDMA, GSM, TDMA, or WCDMA wireless communication system. The wireless device may also transfer the data through both a direct communication link and an indirect communication link.

The direct connection 116 may also be from the first device 102 through a local area network access point or router to the second device 104. In the case of a LAN access point, the first device 102 and the second device 108 104 may be in range of the same access point (AP). In this exemplary embodiment, this is a wireless local area network (WLAN) access point or the like. One skilled in the art will also understand, as mentioned above, that a LAN can be a network of devices communicating with each other directly and not through an access point. The devices themselves form the LAN. The access point to a LAN, as discussed above, may be a wireless access point that complies with the 802.11 standard or WiFi or may also be a Bluetooth system or the like.

A wireless communication link can be established between the two proximate devices to transfer the data in accordance with a plurality of methods and or protocols. In one exemplary embodiment, the connection is established directly between the first device 102 and the second device 108 104, without the aid of an intermediary network node such as a WLAN access point or the base station 108 or the like.

In one embodiment, the user of the first device 102 selects a group of users desired to receive the data. There are numerous ways to identify a device such as telephone number, electronic serial number (ESN), a mobile identification number (MIN) or the like. The device designated as the recipient may also be designated by touch or close proximity in general.

Devices having the capability to transmit and receive directly to and from one another in this embodiment must either constantly monitor a predetermine channel or set of channels or be assigned a channel or set of channels to monitor for other proximate wireless communication devices. In one exemplary embodiment, a request is transmitted over a single predetermined RF channel or a plurality of predetermined RF channels monitored by similar devices. These similar devices may be devices that normally operate on the same network such as a push-to-talk PLMRS network, a CDMA network, a GSM network, WCDMA network or a WLAN for example. Similar devices need only however have the capability to communicate directly with proximate devices as disclosed in the exemplary embodiments. In addition to the direct communication capability the device may also operate as a CDMA device and therefore may communicate over the direct link to a device that also operates as a GSM device. Once the link is established, the data is transferred between the devices

There are multiple methods of forming ad hoc and or mesh networks known to those of ordinary skill in the art. These include, for example, several draft proposals for ad hoc network protocols including: The Zone Routing Protocol (ZRP) for Ad Hoc Networks, Ad Hoc On Demand Distance Vector (AODV) Routing, The Dynamic Source Routing Protocol for Mobile Ad Hoc Networks, Topology Broadcast based on Reverse-Path Forwarding (TBRPF), Landmark Routing Protocol (LANMAR) for Large Scale Ad Hoc Networks, Fisheye State Routing Protocol (FSR) for Ad Hoc Networks, The Interzone Routing Protocol (IERP) for Ad Hoc Networks, The Intrazone Routing Protocol (IARP) for Ad Hoc Networks, or The Bordercast Resolution Protocol (BRP) for Ad Hoc Networks.

While the present invention and what is considered presently to be the best modes thereof have been described in a manner that establishes possession thereof by the inventors and that enables those of ordinary skill in the art to make and use the inventions, it will be understood and appreciated that there are many equivalents to the exemplary embodiments disclosed herein and that myriad modifications and variations may be made thereto without departing from the scope of the invention, which is to be limited not by the exemplary embodiments but by the appended claims.

## Claims

1. A method in an electronic device for transferring information to another electronic device:
in a first device (102), selecting (402) content (104) to be transferred;
associating (404) a uniquely identifiable set of information (106) with the content (104);
transferring (406) the uniquely identifiable set of information (106) associated with the content (104) to a second device (108) with content provider identification;
in the second device (108), requesting (408) content from a content provider (110), by identifying the content provider identification along with the uniquely identifiable set of information (106);
in the content provider 110, determining (410) that the uniquely identifiable set of information (106) associated with the content (104) transferred (406) from the first device (102), matches the uniquely identifiable set of information (106) sent from the second device (108); and then sending (412) the content (104) to the second device (108).

2. The method according to claim 1, wherein the uniquely identifiable set of information (106) is a representation of an independent physical object.

3. The method according to claim 2, wherein the uniquely identifiable set of information (106) is a picture of the independent physical object.

4. The method according to claim 2, wherein the independent physical object is printed coded information.

5. The method according to claim 4, wherein the printed coded information is a barcode.

6. The method according to claim 1, wherein the uniquely identifiable set of information (106) is presented by the electronic device.

7. The method according to claim 6, wherein the uniquely identifiable set of information (106) is printed by a printer carried on the electronic device.

8. The method according to claim 6, wherein the uniquely identifiable set of information (106) is presented on a display carried on the electronic device.

9. The method according to claim 1, wherein the content is stored in the electronic device.

10. The method according to claim 1, wherein a copy of the content is stored at the content provider.

11. The method according to claim 1, wherein the content is protected data.

12. The method according to claim 11, wherein the protected data has a property right associated therewith.

## Patentansprüche

1. Verfahren in einem elektronischen Gerät zur Übertragung von Informationen an ein anderes elektronisches Gerät:
in einem ersten Gerät (102) Auswählen (402) von Inhalt (104), der zu übertragen ist;
Verbinden (404) eines eindeutig identifizierbaren Satzes von Informationen (106) mit dem Inhalt (104);
Übertragen (406) des eindeutig identifizierbaren Satzes von Informationen (106), der mit dem Inhalt verbunden ist, an ein zweites Gerät (108) mit Inhaltsanbieter-Identifikation;
in dem zweiten Gerät (108) Anfordern (408) von Inhalt von einem Inhaltsanbieter (110) durch Identifizieren der Inhaltsanbieter-Identifikation zusammen mit dem eindeutig identifizierbaren Satz von Informationen (106);
in dem Inhaltsanbieter 110 Bestimmen (410), dass der eindeutig identifizierbare Satz von Informationen (106), der mit dem Inhalt (104) verbunden ist, der von dem ersten Gerät (102) übertragen (406) wurde, mit dem eindeutig identifizierbaren Satz von Informationen (106) übereinstimmt, der von dem zweiten Gerät gesendet (108) wurde; und dann Senden (412) des Inhalts (104) an das zweite Gerät (108).

2. Verfahren nach Anspruch 1, wobei der eindeutig identifizierbare Satz von Informationen (106) eine Darstellung eines unabhängigen physikalischen Objekts ist.

3. Verfahren nach Anspruch 2, wobei der eindeutig identifizierbare Satz von Informationen (106) ein Bild eines des unabhängigen physikalischen Objekts ist.

4. Verfahren nach Anspruch 2, wobei das unabhängige physikalische Objekt gedruckte kodierte Information ist.

5. Verfahren nach Anspruch 4, wobei die gedruckte kodierte Information ein Barcode ist.

6. Verfahren nach Anspruch 1, wobei der eindeutig identifizierbare Satz von Informationen (106) von dem elektronischen Gerät präsentiert wird.

7. Verfahren nach Anspruch 6, wobei der eindeutig identifizierbare Satz von Informationen (106) von einem Drucker gedruckt wird, der auf dem elektronischen Gerät getragen wird.

8. Verfahren nach Anspruch 6, wobei der eindeutig identifizierbare Satz von Informationen (106) auf einer Anzeige präsentiert wird, die auf dem elektronischen Gerät getragen wird.

9. Verfahren nach Anspruch 1, wobei der Inhalt in dem elektronischen Gerät gespeichert ist.

10. Verfahren nach Anspruch 1, wobei eine Kopie des Inhalts bei dem Inhaltsanbieter gespeichert ist.

11. Verfahren nach Anspruch 1, wobei der Inhalt geschützte Daten sind.

12. Verfahren nach Anspruch 11, wobei die geschützten Daten ein damit verbundenes Eigentumsrecht besitzen.

## Revendications

1. Procédé dans un dispositif électronique pour transférer des informations vers un autre dispositif électronique:
dans un premier dispositif (102), la sélection (402) d'un contenu (104) à transférer ;
l'association (404) d'un ensemble d'informations pouvant être identifié de façon unique (106) au contenu (104) ;
le transfert (406) de l'ensemble d'informations pouvant être identifié de façon unique (106) associé au contenu (104) vers un second dispositif (108) avec une identification de fournisseur de contenu ;
dans le second dispositif (108), la demande (408) d'un contenu provenant d'un fournisseur de contenu (110), par identification de l'identification de fournisseur de contenu avec l'ensemble d'informations pouvant être identifié de façon unique (106) ;
dans le fournisseur de contenu 110, la détermination (410) que l'ensemble d'informations pouvant être identifié de façon unique (106) associé au contenu (104) transféré (406) depuis le premier dispositif (102) correspond à l'ensemble d'informations pouvant être identifié de façon unique (106) envoyé par le second dispositif (108) ; et ensuite l'envoi (412) du contenu (104) au second dispositif (108).

2. Procédé selon la revendication 1, dans lequel l'ensemble d'informations pouvant être identifié de façon unique (106) est une représentation d'un objet physique indépendant.

3. Procédé selon la revendication 2, dans lequel l'ensemble d'informations pouvant être identifié de façon unique (106) est une image de l'objet physique indépendant.

4. Procédé selon la revendication 2, dans lequel l'objet physique indépendant est des informations codées imprimées.

5. Procédé selon la revendication 4, dans lequel les informations codées imprimées sont un code à barres.

6. Procédé selon la revendication 1, dans lequel l'ensemble d'informations pouvant être identifié de façon unique (106) est présenté par le dispositif électronique.

7. Procédé selon la revendication 6, dans lequel l'ensemble d'informations pouvant être identifié de façon unique (106) est imprimé par un dispositif d'impression porté sur le dispositif électronique.

8. Procédé selon la revendication 6, dans lequel l'ensemble d'informations pouvant être identifié de façon unique (106) est présenté sur un dispositif d'affichage porté sur le dispositif électronique.

9. Procédé selon la revendication 1, dans lequel le contenu est stocké dans le dispositif électronique.

10. Procédé selon la revendication 1, dans lequel une copie du contenu est stockée au niveau du fournisseur de contenu.

11. Procédé selon la revendication 1, dans lequel le contenu est des données protégées.

12. Procédé selon la revendication 11, dans lequel les données protégées ont un droit de propriété associé à celles-ci.
